# DEMANDE DE BREVET EUROPEEN

(11) **EP 2 979 967 A1**
(43) Date de publication de la demande: **03.02.2016**
(21) Numéro de dépôt: 15177955.0
(22) Date de dépôt: 22.07.2015
(51) Int. Cl.: B62M 6/40

(54) **VÉLO À ASSISTANCE ÉLECTRIQUE**

(30) Priorité: 30.07.2014 FR 1457364
(71) Demandeur: JCDecaux SA, 92200 Neuilly-Sur-Seine (FR)
(72) Inventeur: UNG, Hang, 75116 PARIS (FR); EBERSOLD, Philippe, 78000 VERSAILLES (FR)
(74) Mandataire: Cabinet Plasseraud

(57) **Abrégé**

Vélo à assistance électrique (11) comprenant : au moins une roue (13, 14) ; un moteur électrique (18) adapté pour entraîner la roue ; un dispositif de commande (22) adapté pour commander le moteur électrique ; et une batterie amovible rechargeable (20) adaptée pour alimenter le moteur électrique.

La batterie comporte une unité centrale électronique reliée à une interface de communication adaptée pour communiquer avec un dispositif électronique personnel (12) d'un utilisateur, l'unité centrale électronique de la batterie étant adaptée pour commander le moteur électrique selon plusieurs modes de commande et pour changer de mode de commande en fonction de signaux de réglage reçus du dispositif électronique personnel.

## Description

### DOMAINE DE L'INVENTION

La présente invention concerne les vélos à assistance électrique (VAE).

Plus particulièrement, l'invention concerne un vélo à assistance électrique comprenant :
- au moins une roue ;
- un moteur électrique adapté pour entraîner la roue ;
- un dispositif de commande adapté pour commander le moteur électrique ; et
- une batterie amovible rechargeable adaptée pour alimenter le moteur électrique.

### ARRIERE-PLAN DE L'INVENTION

Un exemple d'un vélo à assistance électrique de ce type est donné notamment dans le document FR 2 988 068 A1.

### OBJETS DE L'INVENTION

La présente invention a pour but d'améliorer de tels vélos à assistance électrique, en particulier pour offrir aux utilisateurs de meilleures prestations.

A cet effet, un vélo à assistance électrique du genre en question est caractérisé en ce que la batterie comporte une unité centrale électronique reliée à une interface de communication adaptée pour communiquer avec un dispositif électronique personnel d'un utilisateur, l'unité centrale électronique de la batterie étant adaptée pour commander le moteur électrique selon plusieurs modes de commande et pour changer de mode de commande en fonction de signaux de réglage reçus du dispositif électronique personnel.

Grâce à ces dispositions, l'utilisateur a la possibilité de gérer directement son utilisation de l'assistance électrique.

Dans divers modes de réalisation du vélo à assistance électrique selon l'invention, on peut éventuellement avoir recours en outre à l'une et/ou à l'autre des dispositions suivantes :
- l'unité centrale électronique de la batterie est adaptée pour garder en mémoire un dernier réglage reçu du dispositif électronique personnel ;
- l'unité centrale électronique de la batterie est adaptée pour transmettre des données au dispositif électronique personnel ;
- les données transmises au dispositif électronique personnel par l'unité centrale électronique de la batterie comprennent des informations sur un niveau de charge de la batterie ;
- les données transmises au dispositif électronique personnel par l'unité centrale électronique de la batterie comprennent des informations collectées par des capteurs placés sur le vélo ;
- les capteurs comprennent une unité de géolocalisation ;
- les capteurs comprennent des capteurs de données environnementales ;
- la batterie est adaptée pour communiquer par liaison radio avec le dispositif électronique personnel ;
- la liaison radio est une liaison Bluetooth ; et
- le dispositif électronique personnel est choisi parmi un smartphone, un smartpad et un assistant numérique personnel.

Par ailleurs, l'invention a également pour objet un système à assistance électrique comprenant un vélo à assistance électrique tel que décrit précédemment et le dispositif électronique personnel, le vélo comportant un support de fixation sur lequel est fixé le dispositif électronique personnel.

Dans divers modes de réalisation du système à assistance électrique selon l'invention, on peut éventuellement avoir recours en outre à l'une et/ou à l'autre des dispositions suivantes :
- le dispositif électronique personnel est adapté pour localiser la batterie et pour émettre une alerte lorsque la batterie est située à une distance du dispositif électronique personnel supérieure ou égale à une distance prédéterminée ; et
- la distance prédéterminée est égale à 5 m.

### BREVE DESCRIPTION DES DESSINS

L'invention sera mieux comprise à la lecture de la description qui va suivre d'un de ses modes de réalisation, donné uniquement à titre d'exemple non limitatif en se référant aux dessins annexés, sur lesquels :
- la Figure 1 est une vue schématique latérale d'un système à assistance électrique selon l'invention ; et
- la Figure 2 est un schéma bloc illustrant les composants électriques principaux du système de la Figure 1.

### DESCRIPTION PLUS DETAILLEE

Sur les différentes Figures, les mêmes références désignent des éléments identiques ou similaires.

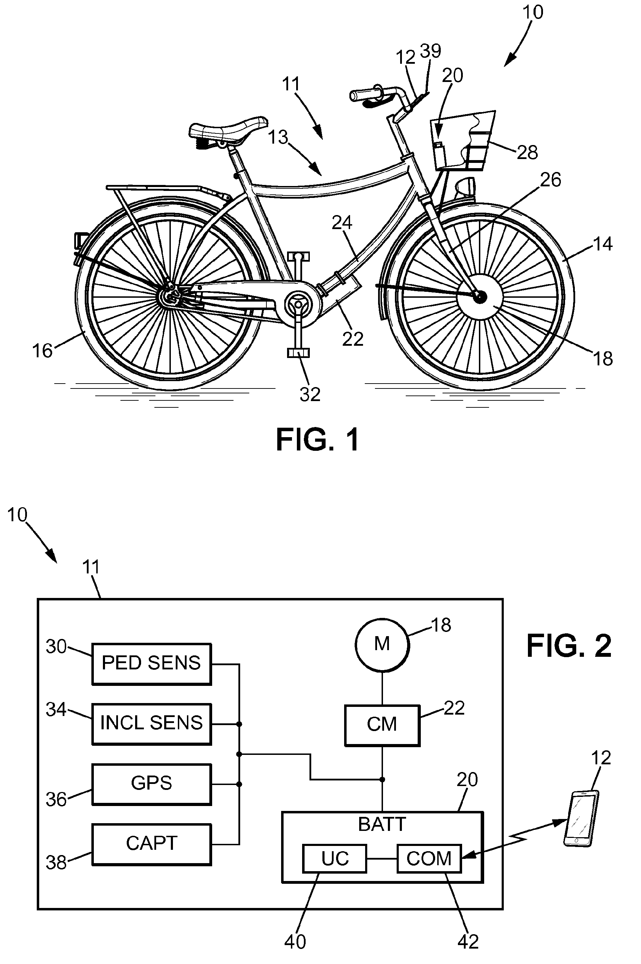

La Figure 1 illustre un système à assistance électrique 10 selon l'invention comprenant un vélo à assistance électrique (VAE) 11 et un dispositif électronique personnel 12 d'un utilisateur, par exemple un smartphone, un smartpad ou tablette, un assistant numérique personnel ou PDA, etc.

Le VAE 11 peut faire partie d'un système automatique de stockage de vélos permettant par exemple de stocker des vélos sur la voie publique de façon à les mettre en libre-service à la disposition du public.

Le VAE 11 comprend de manière générale une armature 13 portée par deux roues 14, 16, un moteur électrique 18 adapté pour entraîner au moins une des roues 14, 16, une batterie amovible rechargeable 20 pour fournir du courant au moteur électrique 18 et un dispositif de commande 22 adapté pour piloter le moteur électrique 18 en fonction d'informations fournies par une pluralité de capteurs, en particulier des capteurs de vitesse et des capteurs de couple de pédale, mais également en fonction d'autres informations comme cela sera expliqué plus en détail par la suite.

Dans l'exemple considéré, le moteur électrique 18 est un moteur moyeu inséré en lieu et place de l'axe de roue avant 14 et adapté pour entraîner directement la roue avant 14.

L'armature 13 comporte notamment un cadre 24 et une fourche avant 26.

Dans l'exemple considéré, le dispositif de commande 22 est fixé sur le cadre 24 et la batterie 20 est montée à l'intérieur d'un panier 28 fixé sur la fourche avant 26.

En fonction des informations (vitesse et couple de pédale) fournies par les différents capteurs au dispositif de commande 22, le dispositif de commande 22 régule le courant fourni par la batterie 20 au moteur électrique 18, et le moteur électrique 18 assiste plus ou moins l'utilisateur en entraînant plus ou moins la roue avant 14.

Comme illustré sur la Figure 2, le dispositif de commande 22 (CM) est relié au moteur 18 (M) et à une pluralité de capteurs.

En particulier, le dispositif de commande 22 est relié à un capteur de pédalier 30 (PED SENS), connu en soi, pour recevoir une mesure de couple appliqué aux pédales 32 (Figure 1) du VAE 11 par l'utilisateur et une mesure de vitesse de rotation des pédales 32.

Avantageusement, le dispositif de commande 22 est également relié à un capteur d'inclinaison 34 (INCL SENS) adapté pour mesurer une inclinaison du VAE 11 (et donc du sol) dans la direction de roulage.

En outre, le VAE 11 peut comprendre une unité de géolocalisation 36 (GPS) reliée au dispositif de commande 22 et permettant de collecter des informations sur le trajet emprunté par l'utilisateur, telles que la position, le jour et l'heure mais également le trafic. En variante, le système de géolocalisation du smartphone 12 peut être utilisé, auquel cas le VAE 11 peut être dépourvu d'unité de géolocalisation 36.

De plus, le VAE 11 peut comprendre divers capteurs de données environnementales 38 (CAPT) reliés au dispositif de commande 22 et permettant de collecter des informations sur le milieu dans lequel évolue le VAE 11 (et donc l'utilisateur), telles que la température, le taux de monoxyde de carbone, d'azote, de bruit, d'humidité, etc.

La batterie 20 (BATT) est reliée au moteur électrique 18 par l'intermédiaire du dispositif de commande 22.

La batterie 20 est en outre reliée aux différents capteurs 30, 34, 36, 38.

La batterie 20 peut appartenir à un utilisateur et être fixée sur un support de fixation 39 (Figure 1) installé par exemple sur le guidon du VAE 11.

La batterie 20 peut être choisie notamment parmi les batteries lithium-ions-polymères et les batteries lithium-fer-phosphate, produisant une tension par exemple de 24 ou 36 V. La batterie 20 peut présenter une capacité de stockage d'énergie électrique comprise entre 40 et 100 Wh (avantageusement comprise entre 60 et 85 Wh), une masse inférieure à 1 kg (avantageusement comprise entre 500 et 900 g), et une dimension maximale (longueur) inférieure à 20 cm (avantageusement comprise entre 10 et 15 cm). La batterie 20 peut présenter par exemple une largeur comprise entre 8 et 12 cm et une épaisseur comprise entre 15 et 35 mm. Ainsi, la batterie 20 est très aisément transportable par l'utilisateur, qui peut ainsi emporter la batterie 20 chez lui pour la recharger.

La batterie 20 comporte une unité centrale électronique 40 (UC) reliée à une interface de communication 42 (COM) adaptée pour communiquer avec le smartphone 12 de l'utilisateur.

La communication entre la batterie 20 et le smartphone 12 est réalisée de préférence par une liaison sans fil, de préférence encore par liaison radio courte portée, par exemple par liaison Bluetooth.

L'unité centrale 40 de la batterie 20 est adaptée pour commander le moteur électrique 18 selon plusieurs modes de commande et pour changer de mode de commande en fonction de signaux de réglage reçus du smartphone 12.

En particulier, la communication entre la batterie 20 et le smartphone 12 peut être activée par le lancement d'une application, appelée ci-après application compagnon, installée au préalable sur le smartphone 12.

Cette application compagnon permet notamment à l'utilisateur de définir des réglages de manière à contrôler le mode de fonctionnement du VAE 11.

Avantageusement, l'unité centrale 40 de la batterie 20 garde en mémoire le dernier réglage reçu du smartphone 12.

L'application compagnon permet en outre au smartphone 12 de recevoir des données de l'unité centrale électronique 40 de la batterie 20, telles que des informations concernant le VAE 11 (par exemple le niveau de charge de la batterie 20), concernant le trajet (localisation, trajet en pente, en descente, plat, le degré d'inclinaison de la route, etc.) mais aussi concernant le milieu environnant dans lequel se trouve le vélo (taux de pollution, taux d'humidité, etc.) grâce aux mesures collectées par les différents capteurs 30, 34, 36, 38 du VAE 11.

Grâce à toutes ces informations, l'utilisateur peut planifier son trajet comme il le souhaite. Il peut par exemple décider de passer par tel chemin ou tel autre, dévier du trajet initial pour s'arrêter visiter des amis en chemin ou pour éviter un endroit fortement pollué. Il peut également décider d'emprunter des routes en montée tout en étant moins assisté pour améliorer ses performances sportives ou pour dépenser un certain nombre de calories, etc.

Le smartphone 12 peut également être adapté pour localiser la batterie 20 et pour émettre une alerte lorsque la batterie 20 est située à une distance du smartphone 12 supérieure ou égale à une distance prédéterminée.

La distance prédéterminée est par exemple égale à 5 m.

L'alerte peut être un son, une notification sur l'écran du smartphone 12 ou encore une vibration du smartphone 12.

Ainsi, l'utilisateur est averti par le smartphone 12 lorsqu'il s'éloigne de la batterie 20, notamment lorsqu'il a remis le VAE 11 sur le système automatique de stockage de vélos et qu'il a oublié de récupérer la batterie 20.

L'invention propose donc un vélo à assistance électrique, en particulier en libre-service, dont l'utilisation peut être personnalisée par chaque utilisateur. Bien entendu, le VAE peut être un vélo personnel appartenant à l'utilisateur.

Le système à assistance électrique selon l'invention permet en effet à l'utilisateur, via son smartphone qui communique avec la batterie amovible pilotant le moteur électrique, de gérer directement et de manière conviviale son utilisation de l'assistance électrique en définissant lui-même les paramètres de cette assistance pour contrôler ainsi le mode de fonctionnement du VAE.

Le système selon l'invention permet également à l'utilisateur d'optimiser cette utilisation et/ou d'être aidé dans la maintenance de la batterie et/ou du VAE, et/ou d'être averti de défauts de fonctionnement en faisant remonter à l'utilisateur différentes informations concernant le VAE (par exemple le niveau de charge de la batterie), concernant le trajet (localisation, trajet en pente, en descente, plat, le degré d'inclinaison de la route, etc.) mais aussi concernant le milieu environnant dans lequel se trouve le vélo (taux de pollution, taux d'humidité, etc.).

Un avantage supplémentaire de l'invention réside dans le fait que, en passant par l'intermédiaire de la batterie, le vélo fonctionne encore avec une assistance électrique personnalisée même si l'utilisateur n'a pas son smartphone sur lui.

## Revendications

1. Vélo à assistance électrique (11) comprenant :
- au moins une roue (13, 14) ;
- un moteur électrique (18) adapté pour entraîner la roue (13, 14) ;
- un dispositif de commande (22) adapté pour commander le moteur électrique (18) ; et
- une batterie amovible rechargeable (20) adaptée pour alimenter le moteur électrique (18),
**caractérisé en ce que** la batterie (20) comporte une unité centrale électronique (40) reliée à une interface de communication (42) adaptée pour communiquer avec un dispositif électronique personnel (12) d'un utilisateur, l'unité centrale électronique (40) de la batterie (20) étant adaptée pour commander le moteur électrique (18) selon plusieurs modes de commande et pour changer de mode de commande en fonction de signaux de réglage reçus du dispositif électronique personnel (12).

2. Vélo (11) selon la revendication 1, dans lequel l'unité centrale électronique (40) de la batterie (20) est adaptée pour garder en mémoire un dernier réglage reçu du dispositif électronique personnel (12).

3. Vélo (11) selon la revendication 1 ou 2, dans lequel l'unité centrale électronique (40) de la batterie (20) est adaptée pour transmettre des données au dispositif électronique personnel (12).

4. Vélo (11) selon la revendication 3, dans lequel les données transmises au dispositif électronique personnel (12) par l'unité centrale électronique (40) de la batterie (20) comprennent des informations sur un niveau de charge de la batterie (20).

5. Vélo (11) selon la revendication 3 ou 4, dans lequel les données transmises au dispositif électronique personnel (12) par l'unité centrale électronique (40) de la batterie (20) comprennent des informations collectées par des capteurs (30, 34, 36, 38) placés sur le vélo.

6. Vélo (11) selon la revendication 5, dans lequel les capteurs comprennent une unité de géolocalisation (36).

7. Vélo (11) selon la revendication 5 ou 6, dans lequel les capteurs comprennent des capteurs de données environnementales (38).

8. Vélo (11) selon l'une quelconque des revendications 1 à 7, dans lequel la batterie (20) est adaptée pour communiquer par liaison radio avec le dispositif électronique personnel (12).

9. Vélo (11) selon la revendication 8, dans lequel la liaison radio est une liaison Bluetooth.

10. Vélo (11) selon l'une quelconque des revendications 1 à 9, dans lequel le dispositif électronique personnel (12) est choisi parmi un smartphone, un smartpad et un assistant numérique personnel.

11. Système à assistance électrique (10) comprenant un vélo à assistance électrique (11) selon l'une quelconque des revendications 1 à 10 et le dispositif électronique personnel (12), le vélo (11) comportant un support de fixation (39) sur lequel est fixé le dispositif électronique personnel (12).

12. Système (10) selon la revendication 11, dans lequel le dispositif électronique personnel (12) est adapté pour localiser la batterie (20) et pour émettre une alerte lorsque la batterie (20) est située à une distance du dispositif électronique personnel (12) supérieure ou égale à une distance prédéterminée.

13. Système (10) selon la revendication 12, dans lequel la distance prédéterminée est égale à 5 m.
